# EUROPÄISCHE PATENTSCHRIFT

(11) **EP 3 936 361 B1**
(45) Veröffentlichungstag und Bekanntmachung des Hinweises auf die Patenterteilung: **26.04.2023**
(21) Anmeldenummer: 20184925.4
(22) Anmeldetag: 09.07.2020
(51) Int. Cl.: B60K 15/03, B60K 15/04

(54) **KRAFTSTOFFTANKVORRICHTUNG**
FUEL TANK DEVICE
DISPOSITIF RÉSERVOIR DE CARBURANT

(43) Veröffentlichungstag der Anmeldung: 12.01.2022
(73) Patentinhaber: Magna Energy Storage Systems GesmbH, 8261 Sinabelkirchen (AT)
(72) Erfinder: TURAN, Alparslan, 8010 Graz (AT)
(74) Vertreter: Zangger, Bernd

(56) Entgegenhaltungen:
- EP-A1- 2 186 669
- DE-A1- 10 304 067
- DE-A1- 10 311 320
- US-A1- 2006 113 104

## Beschreibung

### Gebiet der Erfindung

Die vorliegende Erfindung betrifft eine Kraftstofftankvorrichtung eines Fahrzeuges.

### Stand der Technik

Kraftstofftanks zur Aufnahme des Kraftstoffs eines Kraftfahrzeuges sind hinlänglich bekannt. Zum Befüllen der Tanks werden üblicherweise Einfüllrohre verwendet, die sich von einem zur Betankung zugänglichen Tankstutzen bis zum Tank erstrecken können. In jüngerer Zeit werden auch Tanks aus Kunststoff verwendet, sowie Einfüllrohre aus Kunststoff, die leichter sind und kostengünstiger hergestellt werden können, als früher übliche Tanks und Einfüllrohre aus Metall. Allerdings werden manche Bauteile einer Kraftstofftankvorrichtung weiterhin aus Metall gefertigt, auch wenn der Tank selbst und/oder zumindest dessen Einfüllrohr aus Kunststoff gefertigt wird, beispielsweise Spannbänder oder Wärmeabschirmbleche.

Für solche metallischen Bauteile besteht das Problem, die Bauteile, trotz der Kunststoffteile in deren Umgebung, zu erden. Beispielsweise werden die metallischen Bauteile bei Verwendung mit einem Kunststoff-Einfüllrohr über ein Erdungskabel, das entlang des Einfüllrohrs verlegt wird und dessen Ende im Bereich des Tankstutzens mit der Karosserie verbunden ist, geerdet. Allerdings ist diese Lösung kompliziert und teuer in der Herstellung, da der genaue Verlauf des Erdungskabels an mehreren Positionen gesichert und in der Fertigung, beispielsweise mittels Kameraprüfungen, überwacht werden muss. Die Handhabung des Tanks bei der Fertigung wird durch das lange Erdungskabel schwieriger.

Aus der DE 103 04 067 A1 ist eine Verliersicherung für einen einen Einfüllstutzen abschließenden Tankdeckel bekannt, mit einem Verbindungselement, das mit einem ersten Ende mit dem Fahrzeug und mit einem dem ersten Ende gegenüberliegenden zweiten Ende mit dem Tankdeckel verbindbar ist, wobei das Verbindungselement an seinem zweiten Ende einen Ring oder eine Lochscheibe aufweist, über die es mit dem Tankdeckel verbindbar ist, wobei über eine ringförmige, den Einfüllstutzen umschließbare Schelle mit einem Halter mit mindestens einer lochartigen Öffnung das Verbindungselement mit der Schelle verbindbar ist.

Die US 2006/113104 A1 offenbart ein Kraftstoffeinfüllrohr zum Fördern von Kraftstoff von einer Quelle zu einem Behälter, wobei im Wesentlichen das gesamte Rohr aus Kunststoffmaterial hergestellt ist; wobei das Kraftstoffeinfüllrohr so ausgebildet ist, dass zumindest ein Teil seiner Oberfläche mit einer Schicht aus elektrisch leitendem Material versehen ist.

Aus der DE 103 11 320 A1 ist ein Tankdeckel bekannt, der zum Öffnen und Schließen einer Einlassöffnung verwendet wird, wobei der Tankdeckel folgendes aufweist: eine Verschlusseinrichtung, die die Einlassöffnung verschließt; einen Griff, der an der Verschlusseinrichtung montiert ist und aus einem nichtleitfähigen Kunstharzmaterial besteht; und einen Erdungsmechanismus, der aus einem leitfähigen Material besteht, wobei der Erdungsmechanismus folgendes aufweist: ein Kontaktelement, das an dem Griff angebracht ist und an einer Position angeordnet ist, die mit dem Griff in Kontakt ist, wenn der Griff mit Fingern gehalten wird; und ein Halteband, das mit dem Kontaktelement verknüpft ist und das zur Verbindung mit einem Kraftfahrzeugkarosserieelement verwendet wird.

Das Dokument EP 2 186 669 A1 lehrt eine Struktur eines Kraftstoffdeckelteils, umfassend: einen Tankdeckel, der an einer Fahrzeugkarosserie mit einem dazwischen eingefügten Scharnier getragen wird; einen konkaven Abschnitt der Fahrzeugkarosserie, der durch den Tankdeckel abgedeckt ist, um geöffnet oder geschlossen werden zu können; eine Einfüllöffnung, die in dem konkaven Abschnitt der Fahrzeugkarosserie angeordnet ist; und einen deckellosen Mechanismus, der in der Einfüllöffnung vorgesehen ist, um einen Öleinfüllvorgang durchzuführen, der kein Anbringen und Abnehmen des Tankdeckels erfordert, wobei ein leitender Durchgang von dem Tankdeckel zu der Fahrzeugkarosserie bereitgestellt ist.

### Zusammenfassung der Erfindung

Es ist eine Aufgabe der Erfindung, eine Kraftstofftankvorrichtung eines Fahrzeuges der genannten Art in dieser Hinsicht zu verbessern und insbesondere eine Kraftstofftankvorrichtung anzugeben, die schnell und günstig gefertigt werden kann und dabei eine zuverlässige Erdung metallischer Komponenten der Kraftstofftankvorrichtung ermöglicht.

Die Lösung der Aufgabe erfolgt durch eine Kraftstofftankvorrichtung eines Fahrzeuges, umfassend einen Kraftstofftank, ein Einfüllrohr zum Befüllen des Kraftstofftanks aus Kunststoff und zumindest ein metallisches Bauteil der Kraftstofftankvorrichtung, wobei das Einfüllrohr eine leitfähige Au-ßenschicht aufweist, wobei das metallische Bauteil über einen elektrischen Anschluss mit der leitfähigen Außenschicht des Einfüllrohrs verbunden ist, wobei das metallische Bauteil über den Anschluss und die leitfähige Außenschicht des Einfüllrohrs geerdet ist, wobei die leitfähige Außenschicht des Einfüllrohrs eine leitende Außenschicht eines mehrschichtigen Kunststoff-Einfüllrohres ist.

Erfindungsgemäß wird ein metallisches Bauteil des Tanks, beispielsweise ein metallisches Spannband, über das Einfüllrohr aus Kunststoff geerdet, ohne jedoch eine elektrische Leitung entlang des Einfüllrohrs zu verlegen. Vielmehr wird direkt das Einfüllrohr genutzt, nämlich eine leitende Au-ßenschicht eines mehrschichtigen Kunststoff-Einfüllrohres, um das Bauteil zu erden. Das metallische Bauteil wird über einen geeigneten, elektrisch leitfähigen Anschluss mit der leitenden Außenschicht des Einfüllrohres verbunden. Die Erdung bzw. der Masseanschluss erfolgt dann letztlich über das andere Ende des Einfüllrohres, an dem die Außenschicht des Einfüllrohres mit einer geeigneten elektrischen Masse elektrisch leitend verbunden ist, insbesondere mit der Karosserie des Kraftfahrzeuges.

Vorzugsweise umfasst der Anschluss eine Anschlussfahne aus Metall, wobei die Anschlussfahne aus dem Einfüllrohr herausgeführt ist, wobei eine elektrisch leitende Verbindung zwischen der Anschlussfahne und der leitfähigen Außenschicht des Einfüllrohrs besteht.

Die Anschlussfahne ist bevorzugt in einen Kunststoffaufbau des Einfüllrohrs miteingespritzt, insbesondere in einen Leitungshalter, beispielsweise in einen Leitungsclip. Der Leitungshalter kann bevorzugt zur Befestigung einer Entlüftungsleitung dienen. Der Leitungshalter, insbesondere Leitungsclip, besteht bevorzugt aus einem leitfähigen Material.

Vorzugsweise ist der Anschluss, insbesondere die Anschlussfahne, an dem der Betankungsöffnung abgewandten Ende des Einfüllrohrs ausgebildet, also in einem Bereich des Einfüllrohrs, der Nahe dem in Einbaulage unteren Ende des Einfüllrohres liegt. Die Erdung erfolgt dann zu einem guten Teil über das Einfüllrohr und weniger über ein mit dem Anschluss verbundenes Erdungskabel.

Die Erdung des Bauteils erfolgt über den Anschluss und die leitfähige Außenschicht des Einfüllrohrs, wobei bevorzugt die elektrisch leitende Außenschicht des Einfüllrohrs, an dem der Betankungsöffnung zugewandten Ende des Einfüllrohrs, mit der Karosserie des Fahrzeuges elektrisch leitend verbunden ist, um eine Erdung über die Karosserie zu bewirken.

Vorzugsweise ist die elektrisch leitende Außenschicht des Einfüllrohrs an dem der Betankungsöffnung zugewandten Ende des Einfüllrohrs mit einem Verschlusssockel aus Metall elektrisch leitend verbunden. Der Verschlusssockel kann zur Aufnahme einer Zapfpistole ausgebildet sein und kann mit einem Verschlussdeckel verschließbar sein.

Die elektrisch leitende Außenschicht des Einfüllrohres kann durch Verpressung mit dem Verschlusssockel aus Metall elektrisch leitend verbunden sein, wobei der Verschlusssockel bevorzugt außen am Einfüllrohr und somit an der elektrisch leitenden Außenschicht anliegt. Im Bereich der Verpressung sind bevorzugt Rippen außen am Einfüllrohr ausgebildet.

Das metallische Bauteil, das geerdet werden soll, kann insbesondere ein Spannband, ein Wärmeabschirmblech und/oder ein Verstärkungsring einer Serviceöffnung des Kraftstofftanks sein.

Das metallische Bauteil kann über ein Erdungskabel mit dem Anschluss, insbesondere mit der Anschlussfahne, elektrisch leitend verbunden sein, wobei das Erdungskabel bevorzugt kurz ausgebildet ist, kürzer als das Einfüllrohr und bevorzugt kürzer als die Hälfte des Einfüllrohrs. Das Erdungskabel ist vorzugsweise kürzer als 30 cm, besonders bevorzugt kürzer als 20 cm ausgebildet.

### Kurzbeschreibung der Zeichnungen

Die Erfindung wird im Folgenden beispielhaft unter Bezugnahme auf die Zeichnungen beschrieben.
- Fig. 1: ist eine dreidimensionale Ansicht des unteren Endes eines Einfüllrohres einer erfindungsgemäßen Kraftstofftankvorrichtung.
- Fig. 2: ist eine dreidimensionale Ansicht des unteren Endes eines Einfüllrohres einer erfindungsgemäßen Kraftstofftankvorrichtung gemäß Fig. 1, mit angeschlossenem Erdungskabel.
- Fig. 3: ist eine dreidimensionale Ansicht des oberen Endes eines Einfüllrohres einer erfindungsgemäßen Kraftstofftankvorrichtung.

### Detaillierte Beschreibung der Erfindung

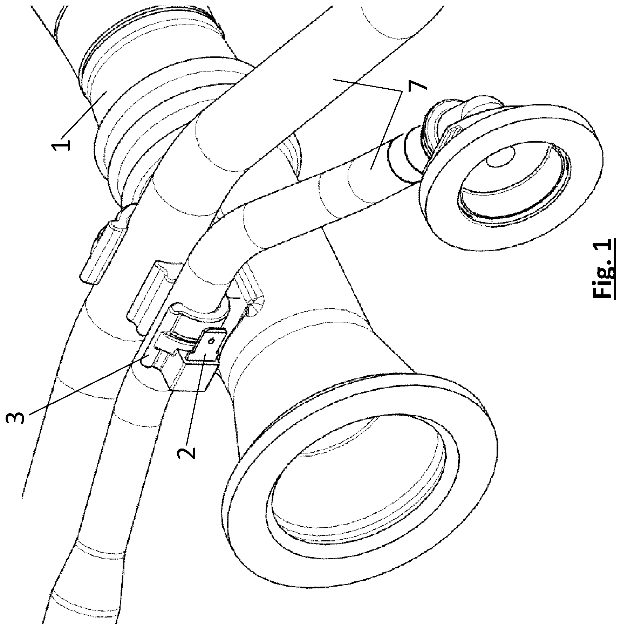

In Fig. 1 ist das in Einbaulage untere Ende eines Einfüllrohres 1, das der Einfüllöffnung des Einfüllrohres 1 abgewandt ist, einer erfindungsgemäßen Kraftstofftankvorrichtung dargestellt.

Das Einfüllrohr 1 ist aus einem Kunststoff hergestellt und weist eine leitfähige Außenschicht auf. Ein elektrischer Anschluss 2, nämlich eine Anschlussfahne aus Metall, ist aus dem Einfüllrohr 1 herausgeführt. Der Anschluss 2 ist elektrisch leitend mit der Außenschicht des Einfüllrohres 1 verbunden.

Der Anschluss 2, insbesondere die Anschlussfahne, ist an dem von der Betankungsöffnung abgewandten Ende des Einfüllrohrs 1 ausgebildet, also in einem in Einbaulage unten liegenden Bereich des Einfüllrohres.

Die Anschlussfahne ist in einen Kunststoffaufbau des Einfüllrohrs 1 miteingespritzt, nämlich in einen Leitungsclip 3, in welchen eine oder mehrere Entlüftungsleitungen 7 eingeklipst werden können. Der Leitungsclip 3 besteht aus einem leitfähigen Material, bevorzugt aus leitfähigem Kunststoff.

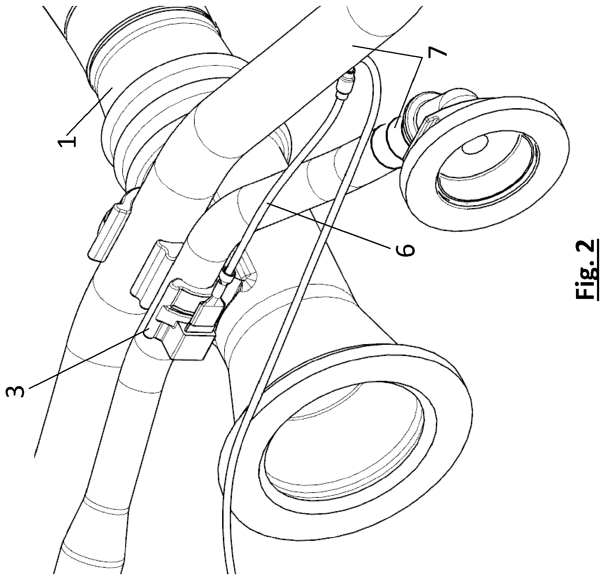

Ein metallisches Bauteil der Kraftstofftankvorrichtung, das ebenfalls zumindest abschnittsweise in der Nähe des unteren Endes des Einfüllrohres angeordnet ist, beispielsweise ein Spannband, ein Wärmeabschirmblech oder ein Verstärkungsring einer Serviceöffnung des Kraftstofftanks, ist - wie in Fig. 2 dargestellt - über ein kurzes Erdungskabel 6 mit dem Anschluss 2, insbesondere mit der Anschlussfahne, elektrisch leitend verbunden.

Über den elektrischen Anschluss 2 und die leitfähige Außenschicht des Einfüllrohrs 1 ist das metallische Bauteil geerdet.

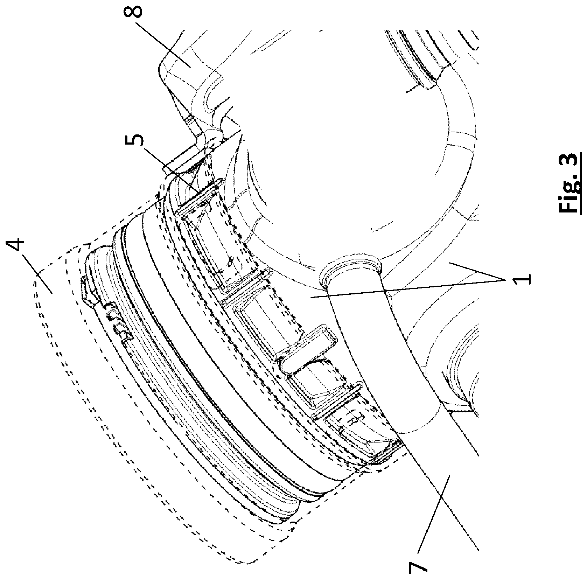

Die Erdung des Bauteils erfolgt, nach dem Anschluss 2 und der leitfähigen Außenschicht des Einfüllrohrs 1, an dem der Betankungsöffnung zugewandten Ende des Einfüllrohrs 1, das in Fig. 3 dargestellt ist, über die Karosserie des Fahrzeuges. Das Einfüllrohr 1 ist dazu über ein elektrisch leitfähiges Verbindungsteil 8 mit der Karosserie verbunden.

Die elektrisch leitende Außenschicht des Einfüllrohrs 1 ist an dem der Betankungsöffnung zugewandten Ende des Einfüllrohrs auch mit einem Verschlusssockel 4 aus Metall elektrisch leitend verbunden.

Die elektrisch leitende Außenschicht des Einfüllrohres 1 ist durch Verpressung mit dem außen am Einfüllrohr anliegenden Verschlusssockel 4 aus Metall elektrisch leitend verbunden. Im Bereich der Verpressung sind elektrisch leitfähige Rippen 5 außen am Einfüllrohr 1 ausgebildet.

### Bezugszeichenliste

- 1: Einfüllrohr
- 2: elektrischer Anschluss
- 3: Leitungshalter
- 4: Verschlusssockel
- 5: Rippen
- 6: Erdungskabel
- 7: Entlüftungsleitung
- 8: Verbindungsteil

## Patentansprüche

1. Kraftstofftankvorrichtung eines Fahrzeuges, umfassend einen Kraftstofftank, ein Einfüllrohr (1) zum Befüllen des Kraftstofftanks aus Kunststoff und zumindest ein metallisches Bauteil der Kraftstofftankvorrichtung, wobei das Einfüllrohr (1) eine leitfähige Au-ßenschicht aufweist, wobei das metallische Bauteil über einen elektrischen Anschluss (2) mit der leitfähigen Außenschicht des Einfüllrohrs (1) verbunden ist, wobei das metallische Bauteil über den Anschluss (2) und die leitfähige Außenschicht des Einfüllrohrs (1) geerdet ist,
**dadurch gekennzeichnet,**
**dass** die leitfähige Außenschicht des Einfüllrohrs (1) eine leitende Außenschicht eines mehrschichtigen Kunststoff-Einfüllrohres (1) ist.

2. Kraftstofftankvorrichtung nach Anspruch 1,
**dadurch gekennzeichnet, dass** der Anschluss (2) eine Anschlussfahne aus Metall umfasst, wobei die Anschlussfahne aus dem Einfüllrohr (1) herausgeführt ist, wobei eine elektrisch leitende Verbindung zwischen der Anschlussfahne und der leitfähigen Außenschicht des Einfüllrohrs (1) besteht.

3. Kraftstofftankvorrichtung nach zumindest einem der vorhergehenden Ansprüche,
**dadurch gekennzeichnet, dass** die Anschlussfahne in einen Kunststoffaufbau des Einfüllrohrs (1) miteingespritzt ist, insbesondere in einen Leitungshalter (3).

4. Kraftstofftankvorrichtung nach zumindest einem der vorhergehenden Ansprüche,
**dadurch gekennzeichnet, dass** der Anschluss (2), insbesondere die Anschlussfahne, an dem von der Betankungsöffnung abgewandten Ende des Einfüllrohrs (1) ausgebildet ist.

5. Kraftstofftankvorrichtung nach zumindest einem der vorhergehenden Ansprüche,
**dadurch gekennzeichnet, dass** die Erdung des Bauteils über den Anschluss (2) und die leitfähige Außenschicht des Einfüllrohrs (1) erfolgt, wobei die elektrisch leitende Außenschicht des Einfüllrohrs (1), an dem der Betankungsöffnung zugewandten Ende des Einfüllrohrs (1), mit der Karosserie des Fahrzeuges elektrisch leitend verbunden ist.

6. Kraftstofftankvorrichtung nach zumindest einem der vorhergehenden Ansprüche,
**dadurch gekennzeichnet, dass** die elektrisch leitende Außenschicht des Einfüllrohrs (1) an dem der Betankungsöffnung zugewandten Ende des Einfüllrohrs mit einem Verschlusssockel (4) aus Metall elektrisch leitend verbunden ist.

7. Kraftstofftankvorrichtung nach Anspruch 6,
**dadurch gekennzeichnet, dass** die elektrisch leitende Außenschicht durch Verpressung mit dem Verschlusssockel (4) aus Metall elektrisch leitend verbunden ist, wobei im Bereich der Verpressung bevorzugt Rippen (5) außen am Einfüllrohr (1) ausgebildet sind.

8. Kraftstofftankvorrichtung nach zumindest einem der vorhergehenden Ansprüche,
**dadurch gekennzeichnet, dass** das metallische Bauteil ein Spannband, ein Wärmeabschirmblech und/oder ein Verstärkungsring einer Serviceöffnung des Kraftstofftanks ist.

9. Kraftstofftankvorrichtung nach zumindest einem der vorhergehenden Ansprüche,
**dadurch gekennzeichnet, dass** das metallische Bauteil über ein Erdungskabel (6) mit dem Anschluss (2), insbesondere mit der Anschlussfahne, elektrisch leitend verbunden ist.

## Claims

1. Fuel tank device of a vehicle, comprising a fuel tank, a filler pipe (1) for filling the fuel tank made from plastic and at least one metallic component of the fuel tank device, wherein the filler pipe (1) has a conductive outer layer, wherein the metallic component is connected to the conductive outer layer of the filler pipe (1) via an electrical connection (2), wherein the metallic component is earthed via the connection (2) and the conductive outer layer of the filler pipe (1), **characterized in that** the conductive outer layer of the filler pipe (1) is a conductive outer layer of a multi-layered plastic filler pipe (1).

2. Fuel tank device according to Claim 1,
**characterized in that** the connection (2) comprises a connection lug made from metal, wherein the connection lug leads out of the filler pipe (1), wherein an electrically conducting connection is established between the connection lug and the conductive outer layer of the filler pipe (1).

3. Fuel tank device according to at least one of the preceding claims,
**characterized in that** the connection lug is also injected into a plastic structure of the filler pipe (1), in particular into a line holder (3).

4. Fuel tank device according to at least one of the preceding claims,
**characterized in that** the connection (2), in particular the connection lug, is formed at the end of the filler pipe (1) which is remote from the refuelling opening.

5. Fuel tank device according to at least one of the preceding claims,
**characterized in that** the earthing of the component takes place via the connection (2) and the conductive outer layer of the filler pipe (1), wherein the electrically conducting outer layer of the filler pipe (1), at the end of the filler pipe (1) which faces the refuelling opening, is connected to the body of the vehicle in an electrically conducting manner.

6. Fuel tank device according to at least one of the preceding claims,
**characterized in that** the electrically conducting outer layer of the filler pipe (1) at the end of the filler pipe which faces the refuelling opening is connected in an electrically conducting manner to a closure base (4) made from metal.

7. Fuel tank device according to Claim 6,
**characterized in that** the electrically conducting outer layer is connected in an electrically conducting manner to the closure base (4) made from metal by means of a press connection, wherein ribs (5) are preferably formed on the outside of the filler pipe (1) in the region of the press connection.

8. Fuel tank device according to at least one of the preceding claims,
**characterized in that** the metallic component is a tension band, a heat-shielding plate and/or a reinforcing ring of a service opening of the fuel tank.

9. Fuel tank device according to at least one of the preceding claims,
**characterized in that** the metallic component is connected to the connection (2), in particular to the connection lug, in an electrically conducting manner via an earthing cable (6).

## Revendications

1. Dispositif réservoir de carburant d'un véhicule, comprenant un réservoir de carburant, un tube de remplissage (1) pour remplir le réservoir de carburant en matière plastique et au moins un composant métallique du dispositif réservoir de carburant, le tube de remplissage (1) présentant une couche extérieure conductrice, le composant métallique étant relié par l'intermédiaire d'un raccord électrique (2) à la couche extérieure conductrice du tube de remplissage (1), le composant métallique étant mis à la terre par l'intermédiaire du raccord (2) et de la couche extérieure conductrice du tube de remplissage (1),
**caractérisé en ce que**
la couche extérieure conductrice du tube de remplissage (1) est une couche extérieure conductrice d'un tube de remplissage en matière plastique multicouche (1).

2. Dispositif réservoir de carburant selon la revendication 1, **caractérisé en ce que** le raccord (2) comprend un talon de raccordement en métal, le talon de raccordement étant sorti du tube de remplissage (1), une liaison électriquement conductrice existant entre le talon de raccordement et la couche extérieure conductrice du tube de remplissage (1).

3. Dispositif réservoir de carburant selon au moins l'une quelconque des revendications précédentes,
**caractérisé en ce que** le talon de raccordement est co-injecté dans une structure en matière plastique du tube de remplissage (1), notamment dans un support de conduite (3).

4. Dispositif réservoir de carburant selon au moins l'une quelconque des revendications précédentes,
caractérisé en en ce que le raccord (2), notamment le talon de raccordement, est réalisé à l'extrémité du tube de remplissage (1) détournée de l'ouverture du ravitaillement.

5. Dispositif réservoir de carburant selon au moins l'une quelconque des revendications précédentes,
**caractérisé en ce que** la mise à la terre du composant s'effectue par l'intermédiaire du raccord (2) et de la couche extérieure conductrice du tube de remplissage (1), la couche extérieure électriquement conductrice du tube de remplissage (1) étant reliée de manière électriquement conductrice à la carrosserie du véhicule à l'extrémité du tube de remplissage (1) tournée vers l'ouverture de ravitaillement.

6. Dispositif réservoir de carburant selon au moins l'une quelconque des revendications précédentes,
**caractérisé en ce que** la couche extérieure électriquement conductrice du tube de remplissage (1) est reliée de manière électriquement conductrice à un socle de fermeture (4) en métal à l'extrémité du tube de remplissage tournée vers l'ouverture de ravitaillement.

7. Dispositif réservoir de carburant selon la revendication 6,
**caractérisé en ce que** la couche extérieure électriquement conductrice est reliée de manière électriquement conductrice par compression au socle de fermeture (4) en métal, des nervures (5) étant de préférence réalisées à l'extérieur sur le tube de remplissage (1) dans la zone de la compression.

8. Dispositif réservoir de carburant selon au moins l'une quelconque des revendications précédentes,
**caractérisé en ce que** le composant métallique est une bande de serrage, une tôle de protection thermique et/ou une bague de renforcement d'un orifice de service du réservoir de carburant.

9. Dispositif réservoir de carburant selon au moins l'une quelconque des revendications précédentes,
**caractérisé en ce que** le composant métallique est relié de manière électriquement conductrice au raccord (2), notamment au talon de raccordement, par l'intermédiaire d'un câble de mise à la terre (6).
